# DEMANDE DE BREVET EUROPEEN

(11) **EP 1 119 124 A1**
(43) Date de publication de la demande: **25.07.2001**
(21) Numéro de dépôt: 01200051.9
(22) Date de dépôt: 09.01.2001
(51) Int. Cl.: H04J 3/06

(54) **Synchronisation d'un récepteur avec une station d'émission dans un système de télécommunications de type TDMA**

(30) Priorité: 11.01.2000 FR 0000290
(71) Demandeur: Koninklijke Philips Electronics N.V., 5621 BA Eindhoven (NL)
(72) Inventeur: Taverdet, Agnès, 75008 Paris (FR)
(74) Mandataire: Landousy, Christian

(57) **Abrégé**

La présente invention décrit une méthode et un dispositif de synchronisation permettant à un récepteur d'ajuster sa base de temps sur celle d'une station d'émission. Un tel dispositif comprend un synthétiseur de fréquences, programmé sur une des fréquences de fonctionnement du système; des moyens de stockage STO comprenant m emplacements REG1 à REGm et permettant de stocker les trames TDMA émises par la station d'émission ; des moyens de corrélation COR qui calculent en parallèle les produits de corrélation d'une partie du contenu des emplacements avec une portion d'un message de synchronisation contenant le mot de synchronisation SYNC ; et un contrôleur CONT qui interrompt les moyens de corrélation dès qu'un message de synchronisation, comprenant une identité d'une station d'émission reconnue par le récepteur, a été trouvé et qui assure la synchronisation dudit récepteur avec la station d'émission, à partir de la détermination de la position du message de synchronisation dans l'emplacement du récepteur. En cas d'échec, la méthode de synchronisation est recommencée avec une nouvelle fréquence, ceci jusqu'à l'obtention d'une identité de station d'émission reconnue par le récepteur.

Application : Systèmes de télécommunications de type TDMA

## Description

La présente invention concerne une méthode de synchronisation d'un récepteur avec une station d'émission dans un système de télécommunications de type TDMA.

Elle concerne également un récepteur comportant un dispositif de synchronisation lui permettant de se synchroniser avec une station d'émission dans un système de télécommunications de type TDMA.

Elle concerne enfin un système de télécommunications de type TDMA comportant au moins un tel récepteur et au moins une station d'émission.

L'invention a de multiples applications, notamment dans les systèmes de télécommunications numériques sans fil, de type DECT par exemple, ou encore dans les systèmes de radiocommunications mobiles de type GSM.

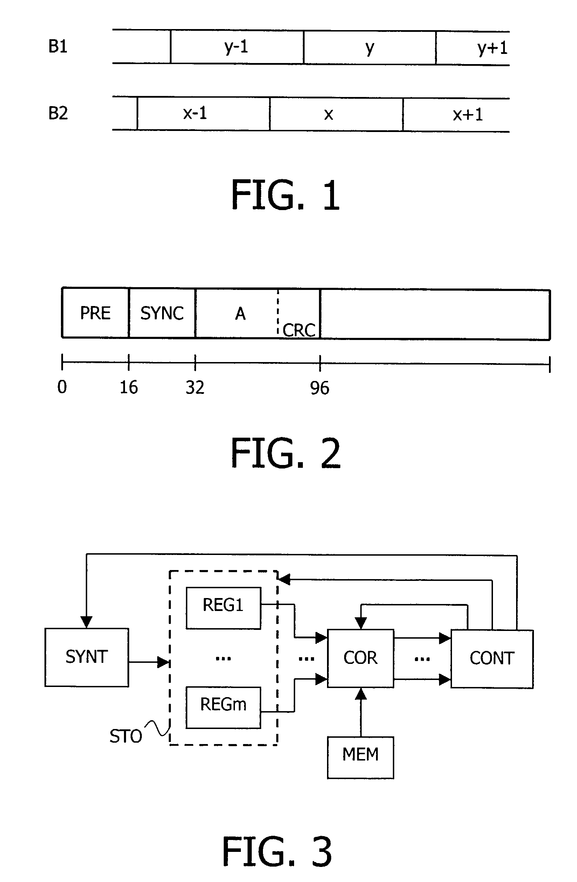

Le système de télécommunications selon l'invention utilise des trames TDMA. Chacune de ces trames est un multiplex de plusieurs tranches de temps. Dans le cas d'un système de type DECT, par exemple, chaque trame a une durée de 10 ms et contient 24 tranches de temps d'une longueur de 480 bits chacune. Les bases de temps de la station d'émission (B1) et du récepteur (B2) sont initialement désynchronisées, comme illustré en figure 1, une tranche de temps (x) de la trame TDMA reçue se trouvant décalée dans le temps par rapport à la tranche de temps (y) correspondante de la trame TDMA émise.

Afin d'ajuster la base de temps du récepteur sur celle de la station d'émission, qui sert de référence, la station d'émission d'un tel système envoie un message de synchronisation sur un canal au moins une fois par trame. On appelle canal l'association d'une tranche de temps et d'une fréquence d'utilisation du système, 10 fréquences étant généralement utilisées dans le cas d'un système de type DECT. La structure d'un message de synchronisation d'un système DECT est décrite à titre d'exemple en figure 2. Ce message comprend les champs suivants :
- un préambule PRE de 16 bits de long,
- un mot de synchronisation SYNC de 16 bits de long également,
- un champ A, incluant un mot de contrôle CRC, et d'une longueur totale de 64 bits.

Une synchronisation est possible lorsqu'un tel message de synchronisation est trouvé et si ledit message contient une identité de station d'émission reconnue par le récepteur.

Différentes méthodes de synchronisation ont déjà été mises en oeuvre pour des systèmes de télécommunications de type TDMA comme, par exemple, celle exposée dans le brevet anglais GB 2 286 949 A. Une telle méthode de synchronisation permet de synchroniser un récepteur avec une station d'émission à partir de la détection d'un message de synchronisation dont la structure est différente de celle du message présenté en figure 2. En effet, chaque tranche de temps de la trame TDMA émise contient, dans le cas de l'art antérieur cité, une partie du mot de synchronisation, le mot de synchronisation complet ne pouvant pas être détecté tant que la trame TDMA n'a pas été entièrement reçue.

Dans le cas du système de télécommunications qui nous intéresse, le mot de synchronisation est compris dans une seule tranche de temps de la trame TDMA émise, ce qui rend la méthode de l'art antérieur inapplicable.

L'invention a pour but de remédier à cet inconvénient, en proposant une méthode de synchronisation fiable, efficace et adaptée à la structure du message de synchronisation du système de télécommunications qui nous concerne.

A cet effet, la présente invention propose une méthode de synchronisation comprenant :
- une étape de stockage des trames TDMA émises par la station d'émission dans m tranches de temps du récepteur,
- une étape de corrélation qui calcule en parallèle des produits de corrélation d'une partie du contenu des tranches de temps du récepteur avec au moins une portion d'un message de synchronisation,
- une étape de supervision qui interrompt l'étape de corrélation dès qu'un message de synchronisation contenant une identité de station d'émission connue du récepteur a été trouvé dans une tranche de temps dudit récepteur, et qui détermine une position du message de synchronisation dans ladite tranche de temps,
- une étape de synchronisation du récepteur avec la station d'émission à partir de la détermination de la position du message de synchronisation dans la tranche de temps du récepteur.

Une telle méthode de synchronisation est fiable et efficace, notamment dans un environnement perturbé comportant une pluralité de stations d'émission et une pluralité de récepteurs, du fait de la scrutation en parallèle des différentes tranches de temps.

La présente invention propose également une méthode de synchronisation où l'étape de supervision reçoit un résultat de l'étape de corrélation à l'intérieur d'une fenêtre de corrélation CW en n sous étapes successives avec n strictement supérieur à 1, la largeur de la fenêtre de corrélation étant supérieure à une valeur de référence, égale à une valeur entière du rapport du nombre total de bits d'une tranche de temps divisé par n, et le contenu des tranches de temps du récepteur étant décalé vers la gauche de la valeur de référence à chaque sous-étape.

L'efficacité de la méthode s'en trouve accrue, la totalité d'une tranche de temps pouvant être scrutée par cette méthode.

L'invention concerne enfin un récepteur qui peut bénéficier de l'implémentation d'une telle méthode et un système de télécommunication de type TDMA comportant au moins un tel récepteur.

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés dans lesquels :
- la figure 1 illustre la désynchronisation des bases de temps du récepteur et de la station d'émission,
- la figure 2 représente la structure d'un message de synchronisation dans un système de télécommunications de type TDMA,
- la figure 3 est une représentation schématique d'un récepteur comportant un dispositif de synchronisation selon l'invention,
- la figure 4 illustre un mode de réalisation utilisant une méthode de scrutation en deux temps d'une trame TDMA,
- la figure 5 est un organigramme représentant la méthode de synchronisation appliquée à une portion de tranche de temps du récepteur,
- la figure 6 est un organigramme représentant la procédure de scrutation en n temps d'une trame TDMA et de balayage en fréquences selon la méthode de synchronisation de l'invention.

La description suivante concerne un système de télécommunications de type DECT. Cependant, il apparaîtra néanmoins à l'homme de métier que la méthode de synchronisation proposée est également applicable à tout autre système synchrone de télécommunications de type TDMA.

La méthode de synchronisation selon l'invention permet à un récepteur de trouver une station d'émission et d'ajuster sa base de temps sur celle de ladite station d'émission. A cet effet, le récepteur comporte un dispositif de synchronisation qui comprend les éléments suivants, représentés de façon schématique sur la figure 3.
- Tout d'abord, un synthétiseur SYNT de fréquence est programmé sur une des fréquences de fonctionnement du système de télécommunications. Pour la mise en oeuvre de la méthode selon l'invention, le synthétiseur fonctionne en boucle fermée. Ainsi, la fréquence de réception reste stable sur une période de temps au moins égale à la durée d'une trame.
- Des moyens de stockage STO du récepteur comprennent m emplacements (m=24 pour un système DECT), destinés à émettre ou à recevoir des informations, et utilisés ici en réception. Ces emplacements, également appelés tranches de temps du récepteur, sont à titre d'exemple des registres REGI à REGm et permettent de stocker les trames TDMA émises par la station d'émission.
- Des moyens de corrélation calculent ensuite en parallèle des produits de corrélation d'une partie du contenu des tranches de temps du récepteur avec au moins une portion d'un message de synchronisation. Dans le mode de réalisation préféré, la portion de message de synchronisation correspond au mot de synchronisation SYNC, de 16 bits de long pour un système DECT, stocké ici dans une mémoire MEM.
- Des moyens de supervision contrôlent les moyens de corrélation et les interrompent dès qu'un message de synchronisation contenant le mot de synchronisation SYNC a été détecté dans une tranche de temps du récepteur. Ces moyens de supervision vérifient ensuite que le champ A, de 64 bits de long pour un système DECT, qui suit le mot de synchronisation contient un mot de contrôle CRC ainsi qu'une identité de station d'émission connue du récepteur. Si aucun message de synchronisation comprenant ces trois éléments clés (mot de synchronisation, mot de contrôle et identité connue de station d'émission) n'a été trouvé, le synthétiseur est programmé sur une nouvelle fréquence et la méthode de synchronisation se poursuit jusqu'à l'obtention d'une station d'émission correcte. Dans le mode de réalisation préféré, les fréquences sont scrutées selon un ordre croissant mais peuvent également être scrutées dans un autre ordre. Lorsqu'une station d'émission est trouvée, les moyens de supervision déterminent la position du message de synchronisation dans la tranche de temps du récepteur.
- Des moyens de synchronisation décalent alors la base de temps du récepteur du nombre de bits correspondant à cette position pour la réajuster sur celle de la station d'émission.

Dans le mode de réalisation préféré, les moyens de supervision et de synchronisation sont assurés par un contrôleur CONT. Ce contrôleur est, à titre d'exemple, le contrôleur PCD801X de Philips. Un tel composant permet de décaler la base de temps du récepteur au bit près et de connaître la position du message de synchronisation dans la tranche de temps du récepteur. Dans le mode de réalisation préféré, le contrôleur utilise une fenêtre de corrélation CW. Lorsqu'un mot de synchronisation est détecté dans l'un des registres REG1 à REGm et à l'intérieur de cette fenêtre CW, les 64 bits suivant le dernier bit du mot de synchronisation sont traités par le contrôleur.

La fenêtre de corrélation CW peut commencer à partir du bit 32 d'une tranche de temps du récepteur, correspondant à un préambule et un mot de synchronisation positionnés du bit 0 au bit 31. Elle doit être finie avant le bit 416 : une tranche de temps comprenant 480 bits, le récepteur doit pouvoir lire en entier le champ A, qui fait 64 bits, afin de contrôler que le contenu de ce champ est valide.

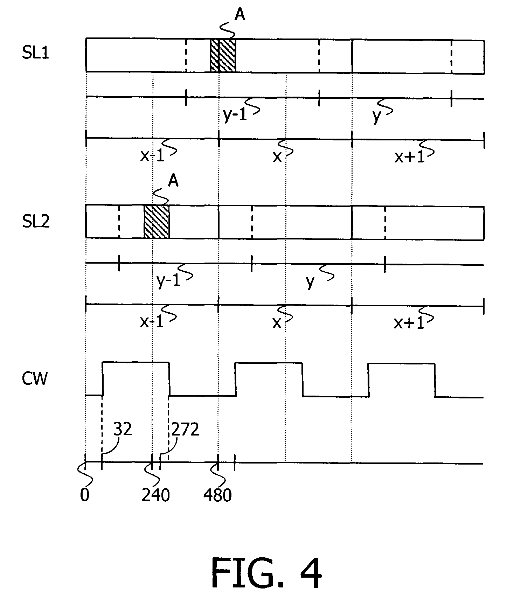

Si le champ A du message de synchronisation se partage entre deux tranches de temps (x-1 et x) du récepteur (voir figure 4), ce dernier ne pourra pas détecter ledit message avec la fenêtre de corrélation décrite ci-dessus. Pour pallier cet inconvénient, une méthode de scrutation en deux temps est mise en oeuvre. Dans un premier temps SL1, seule une moitié de chacune des tranches de temps du récepteur est scrutée, ceci à l'aide d'une fenêtre de corrélation CW qui commence au bit 32 et se termine au bit 272. En pratique, quelques bits supplémentaires sont ajoutés à la borne supérieure de la fenêtre de corrélation CW, comme indiqué sur la figure 4, afin de prendre en compte une possible dérive de la base de temps du récepteur. Si aucun message de synchronisation comprenant les trois éléments clés n'est trouvé, le contrôleur effectue un décalage vers la gauche du contenu des registres d'une longueur égale à une demi tranche de temps soit ici 240 bits. La position de la fenêtre de corrélation restant inchangée, la moitié de la nouvelle tranche de temps du récepteur ainsi obtenue est alors scrutée dans un deuxième temps SL2. Une telle méthode permet ainsi de scruter la totalité d'une trame TDMA.

Cette méthode peut être généralisée à n scrutations successives avec une fenêtre de corrélation CW de largeur égale à la valeur entière de la division de 480 par n à laquelle sont ajoutés quelques bits supplémentaires. Si aucun message de synchronisation comprenant les trois éléments clés n'a été trouvé, le contrôleur décale vers la gauche le contenu des registres d'une longueur égale à la valeur entière de la division de 480 par n, ceci jusqu'à l'obtention d'un message de synchronisation valide ou de la scrutation complète de la trame TDMA.

Les méthodes de synchronisation implémentées actuellement dans les systèmes de télécommunications de type DECT font appel à une recherche du message de synchronisation dans les différentes tranches de temps qui est effectuée de façon séquentielle sur les différents canaux (240 dans le système DECT). Deux modes de recherche sont possibles :
- soit en scrutant séquentiellement les canaux classés selon un ordre décroissant d'une valeur de puissance mesurée dans l'environnement du récepteur,
- soit en scrutant séquentiellement les tranches de temps pour les différentes fréquences de fonctionnement possibles.

La mise en oeuvre de la méthode selon l'invention permet d'une part de réduire le temps de recherche d'une synchronisation, le mode de scrutation séquentiel par fréquence pouvant être très long notamment si la station d'émission transmet le message de synchronisation sur la dernière fréquence scrutée. D'autre part, la méthode de synchronisation selon l'invention dispose d'une meilleure fiabilité par rapport au mode de scrutation par canal. En effet, la synchronisation peut échouer dans un environnement perturbé lorsque la tranche de temps du récepteur contenant le message de synchronisation est testée longtemps après que la mesure de puissance a été effectuée, un décalage entre la base de temps du récepteur et celle de la station d'émission s'étant créé. De plus, dans ces deux modes séquentiels de scrutation, la base de temps du récepteur peut être forcée sur celle présumée d'une station d'émission chaque fois qu'un message de synchronisation est trouvé. Mais si ce message ne contient pas une identité correcte de station d'émission, la base de temps doit être restaurée, ce qui augmente encore le temps de recherche.

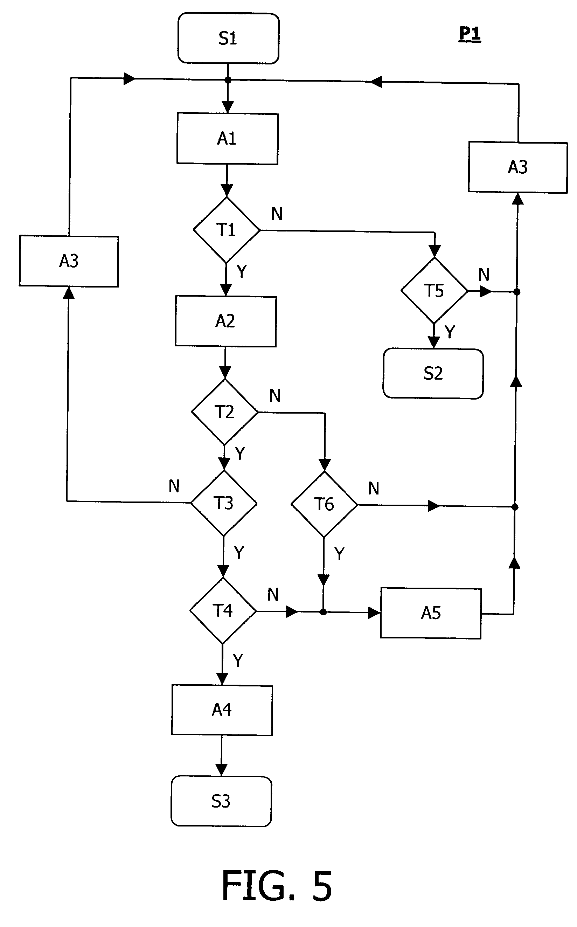

La figure 5 est un organigramme représentant la méthode de synchronisation appliquée à une portion de tranche de temps du récepteur selon la méthode de synchronisation de l'invention. L'organigramme P1 comprend les étapes et les tests suivants :
- La recherche de la synchronisation entre le récepteur et une station d'émission est tout d'abord lancée (état initial S1).
- Il s'ensuit une étape de corrélation (A1) entre le contenu de la portion de tranche de temps et le mot de synchronisation SYNC.
- Un test T1 est effectué sur le résultat de l'étape de corrélation. Si le mot de synchronisation SYNC a été détecté (Y) à l'intérieur de la fenêtre de corrélation CW, alors une étape de traitement (A2) des 64 bits de la tranche de temps du récepteur, qui suivent le mot de synchronisation et qui correspondent au champ A, est accomplie par le contrôleur ; sinon (N), un test T5 est effectué.
- Un test T2 concernant le résultat de l'étape de comparaison est alors effectué. Si un mot de contrôle CRC a été trouvé lors de l'étape de traitement (Y), alors un test T3 est effectué ; sinon (N), un test T6 est effectué.
- Le test T3 vérifie que le champ A contient bien une identité de station d'émission. Si tel est le cas (Y), un test T4 est effectué ; sinon (N) une étape (A3) d'attente du chargement d'une nouvelle trame succède au test T3. Lorsque la trame est chargée, la méthode de synchronisation recommence avec l'étape de corrélation (A1).
- Le test T4 contrôle la validité de l'identité de la station d'émission. Si cette identité est reconnue par le récepteur (Y), une étape de synchronisation (A4) est effectuée, le contrôleur déterminant la position du message de synchronisation à l'intérieur de la tranche de temps du récepteur et décalant en conséquence la base de temps du récepteur pour l'ajuster sur celle de la station d'émission ; sinon (N), une étape de réduction (A5) de la taille de la fenêtre de corrélation a lieu. La borne inférieure de la fenêtre de corrélation devient égale à z où z est un entier strictement supérieur au numéro du dernier bit du mot de synchronisation déterminé dans la tranche de temps du récepteur. Ainsi, lors du chargement de la trame suivante (A3), la méthode permet de scruter le reste de la portion de tranche de temps du récepteur où un autre mot de synchronisation, correspondant cette fois à un message de synchronisation contenant une identité de station d'émission reconnue par le récepteur, peut être détecté à l'intérieur de la fenêtre de corrélation.
- Le test T5 permet de faire plusieurs essais de corrélation entre le mot de synchronisation et le contenu d'une portion de la tranche de temps du récepteur, ceci afin d'éviter un éventuel risque d'erreur. Si le nombre d'essais accordés a été atteint (Y), la méthode de synchronisation est suspendue (état intermédiaire S2) pour la portion de tranche de temps considérée ; sinon (N), la méthode est recommencée à son début (A1), après le chargement d'une nouvelle trame (A3).
- Le test T6 permet de faire plusieurs comparaisons entre le mot de contrôle CRC et le contenu du champ A. Si plusieurs essais se sont avérés infructueux (Y), alors la fenêtre de corrélation est réduite (A5) afin de scruter le reste de la portion de tranche de temps après le chargement de la trame suivante (A3) ; sinon (N), la trame suivante est scrutée avec une fenêtre de corrélation inchangée.
- Une fois la synchronisation effectuée (A4), la méthode de synchronisation s'achève (état final S3) et les recherches effectuées sur les 23 autres portions de tranches de temps du récepteur sont interrompues.

Dans le mode de réalisation préféré, le résultat de la corrélation doit être maximum pour passer au test suivant ; en contrepartie, plusieurs essais sont effectués. Dans un autre mode de réalisation, il est également possible d'autoriser une erreur dans le résultat de la corrélation, d'une ou deux unités par exemple, et de limiter le nombre d'essais effectués.

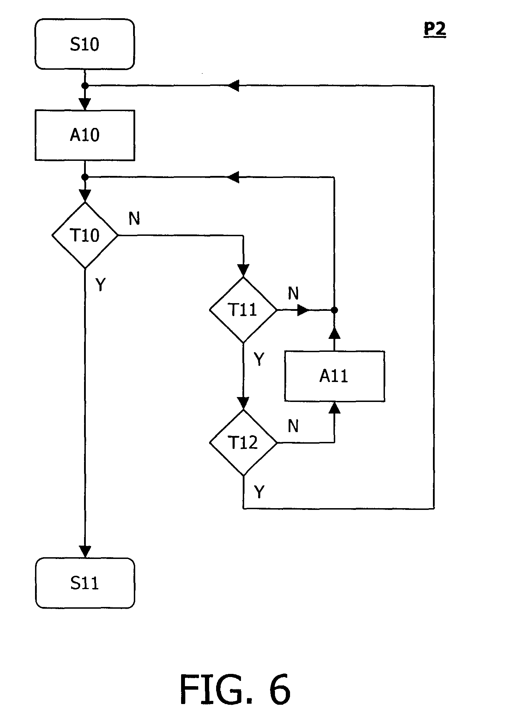

La figure 6 est un organigramme P2 représentant la procédure de scrutation d'une trame TDMA en n temps et de balayage en fréquences selon la méthode de synchronisation de l'invention.
- La recherche de la synchronisation entre le récepteur et une station d'émission est tout d'abord lancée (S10), par exemple lors de la mise en marche du récepteur.
- Il s'ensuit une étape de programmation (A10) du synthétiseur de fréquences SYNT pour définir une première fréquence de réception.
- Un test T10 est effectué sur l'état de la recherche d'une synchronisation avec une station d'émission pour les 24 portions de tranches de temps. Si l'une d'entre elles a atteint son état final S3 (Y), alors la procédure de scrutation est terminée (S11).
- Dans le cas contraire (N), un test T11 est effectué afin de contrôler si toutes les portions de tranches de temps du récepteur ont atteint l'état intermédiaire S2 correspondant au fait qu'aucun mot de synchronisation n'a été détecté à l'intérieur de la fenêtre de corrélation. Si tel est le cas (Y), un test T12 est effectué ; sinon (N), la procédure de scrutation revient au test T10.
- Le test T12 concerne le nombre de sous étapes de scrutation, une trame TDMA étant scrutée en n sous étapes successives de scrutation. Si ce nombre est égal à n (Y), c'est-à-dire si toute la trame a été scrutée, alors la procédure de scrutation recommence à son début et une nouvelle fréquence est testée (A10).
- Dans le cas contraire (N), une étape de décalage du contenu des registres (A11) est accomplie par le contrôleur, le décalage étant à chaque fois égal à une valeur entière de la division de 480 par n, et la procédure de scrutation revient au test T10.

Il doit être clair que le verbe "comprendre" n'exclut pas la présence d'autres étapes ou éléments que ceux listés dans une revendication.

## Revendications

1. Méthode de synchronisation d'un récepteur avec une station d'émission dans un système de télécommunications de type TDMA comprenant :
- une étape de stockage des trames TDMA émises par la station d'émission dans m tranches de temps du récepteur,
- une étape de corrélation qui calcule en parallèle des produits de corrélation d'une partie du contenu des tranches de temps du récepteur avec au moins une portion d'un message de synchronisation,
- une étape de supervision qui interrompt l'étape de corrélation dès qu'un message de synchronisation contenant une identité de station d'émission connue du récepteur a été trouvé dans un tranche de temps dudit récepteur, et qui détermine une position du message de synchronisation dans ladite tranche de temps,
- une étape de synchronisation du récepteur avec la station d'émission à partir de la détermination de la position du message de synchronisation dans la tranche de temps du récepteur.

2. Méthode de synchronisation selon la revendication 1, où les étapes de stockage et de corrélation sont réitérées pour différentes valeurs de fréquences jusqu'à ce que le message de synchronisation contenant une identité de station d'émission connue du récepteur soit déterminé par l'étape de supervision.

3. Méthode de synchronisation selon la revendication 1, où l'étape de supervision reçoit un résultat de l'étape de corrélation à l'intérieur d'une fenêtre de corrélation CW en n sous étapes successives avec n strictement supérieur à 1, la largeur de la fenêtre de corrélation étant supérieure à une valeur de référence, égale à une valeur entière du rapport du nombre total de bits d'une tranche de temps divisé par n, et le contenu des tranches de temps du récepteur étant décalé vers la gauche de la valeur de référence à chaque sous-étape.

4. Méthode de synchronisation selon la revendication 1, où l'étape de supervision reçoit un résultat de l'étape de corrélation à l'intérieur d'une fenêtre de corrélation CW commençant après un bit d'une tranche de temps du récepteur dont le numéro est celui du dernier bit du mot de synchronisation dans le message de synchronisation, et se terminant avant un bit d'une même tranche de temps du récepteur dont le numéro correspond à la différence entre un nombre total de bits d'une tranche de temps et un nombre de bits d'un champ contenant l'identité de la station d'émission.

5. Méthode de synchronisation selon l'une des revendications 3 et 4, comprenant une étape de réduction de la fenêtre de corrélation, ladite fenêtre commençant à un bit de numéro strictement supérieur au numéro, dans une tranche de temps du récepteur, du dernier bit du mot de synchronisation d'un précédent message de synchronisation non valide.

6. Récepteur comportant un dispositif de synchronisation lui permettant de se synchroniser avec une station d'émission dans un système de télécommunications de type TDMA et comprenant :
- des moyens de stockage STO des trames TDMA émises par la station d'émission dans m emplacements,
- des moyens de corrélation COR qui calculent en parallèle des produits de corrélation d'une partie du contenu des m emplacements avec au moins une portion d'un message de synchronisation,
- un contrôleur CONT qui interrompt le calcul des moyens de corrélation dès qu'un message de synchronisation contenant une identité de station d'émission connue du récepteur a été trouvé dans un emplacement et détermine la position dudit message de synchronisation dans l'emplacement afin de synchroniser le récepteur avec la station d'émission.

7. Récepteur selon la revendication 6, comprenant un synthétiseur de fréquences SYNT, programmable sur différentes fréquences de fonctionnement du système de télécommunications, et dont le contrôleur programme une nouvelle fréquence tant qu'un message de synchronisation contenant une identité de station d'émission connue du récepteur n'a pas été trouvé dans un emplacement dudit récepteur.

8. Récepteur selon la revendication 7, où le synthétiseur de fréquences fonctionne en boucle fermée de façon à assurer la stabilité de la fréquence de réception sur une période de temps au moins égale à la durée d'une trame.

9. Système de télécommunications de type TDMA comportant au moins un récepteur selon la revendication 6 et au moins une station d'émission.
